# EUROPEAN PATENT APPLICATION

(11) **EP 4 303 845 A1**
(43) Date of publication of application: **10.01.2024**
(21) Application number: 22762866.6
(22) Date of filing: 31.01.2022
(51) Int. Cl.: G08C 15/06, G06T 7/00, H04N 7/18

(54) **DETECTION DEVICE, DETECTION METHOD, AND PROGRAM**

(30) Priority: 02.03.2021 JP 2021032510
(71) Applicant: Sony Group Corporation, Tokyo 108-0075 (JP)
(72) Inventor: IRIE Atsushi, Tokyo 108-0075 (JP)
(74) Representative: MFG Patentanwälte Meyer-Wildhagen Meggle-Freund Gerhard PartG mbB
(86) International application number: PCT/JP2022/003476
(87) International publication number: WO 2022/185808

(57) **Abstract**

[Object]

Multiple recognition techniques are controlled between a case in which synchronism is established and another case in which synchronism is not established.

[Solving Means]

A detection device includes multiple sensors that acquire different information regarding a target, and a processor. Each of the multiple sensors includes a timing outputting section that outputs a timing at which the information is acquired. The processor determines whether or not the timings at which the multiple sensors acquire the information are in synchronism with each other, and controls a recognition algorithm of the target in reference to a result of the determination.

## Description

### [Technical Field]

The present disclosure relates to a detection device, a detection method, and a program.

### [Background Art]

Studies on a device that implements recognition of a target with use of a result of sensing by multiple sensors are widely being performed in various fields of inspection apparatuses, on-vehicle apparatuses of automobiles, and so forth. Typically, it is not guaranteed that all of multiple sensors operate normally, and, if an abnormal value is determined, recognition of a target is sometimes implemented in reference to information from the sensors other than the sensor from which the abnormal value is outputted.

However, although, in such a device as described above, it is possible to detect a sensor from which an abnormal value is outputted and perform recognition such that the abnormal value is not reflected, such recognitions are in most cases implemented under a condition that the sensors are operating in synchronism with each other. In such a case as described above, since the sensors are not in synchronism with each other, it is not guaranteed that, even if the abnormal value is omitted, a precise recognition result is outputted.

### [Citation List]

### [Patent Literature]

[PTL 1]
Japanese Patent Laid-open No. 2020-162765

### [Summary]

### [Technical Problem]

As such, the present disclosure provides a detection device, a detection method, and a program by which synchronism of sensors is detected and a recognition technique is controlled depending upon whether or not the sensors are in synchronism with each other.

### [Solution to Problem]

According to an embodiment, a detection device includes multiple sensors that acquire different information regarding a target, and a processor. Each of the multiple sensors includes a timing outputting section that outputs a timing at which the information is acquired. The processor determines whether or not the timings at which the multiple sensors acquire the information are in synchronism with each other, and controls a recognition algorithm of the target in reference to a result of the determination.

The multiple sensors may further include a feature amount acquisition section that acquires a feature amount of the target, and the processor may execute a recognition process of the target in reference to the feature amounts acquired from the multiple sensors.

The processor may execute, in a case where the timings at which the information is acquired by the multiple sensors are in synchronism with each other, recognition of the target in reference to an output or outputs of one or multiple predetermined pieces of the sensors among the multiple sensors.

The processor may execute, in a case where the timings at which the information is acquired by the multiple sensors are not in synchronism with each other, recognition of the target by using an output from a preferred sensor and supplementarily using an output or outputs from the sensor or sensors other than the preferred sensor.

The preferred sensor may be a sensor capable of executing recognition of high accuracy among the multiple sensors.

In a case where a camera that acquires at least RGB information is included in the multiple sensors, the camera may be determined as the preferred sensor.

That one of the multiple sensors that has acquired the information at the earliest timing in a frame in the recognition process may be determined as the preferred sensor.

The processor may perform interpolation of the information outputted from the sensor and used supplementarily, in reference to information acquired in a frame in the past, and execute recognition of the target by using the interpolated information supplementarily.

The processor may execute, in a case where the timings at which the information is acquired by the multiple sensors are not in synchronism with each other, recognition of the target by using an output of the preferred sensor among the multiple sensors.

The preferred sensor may be a sensor capable of executing recognition of high accuracy among the multiple sensors.

In a case where a camera that at least acquires RGB information is included in the multiple sensors, the camera may be determined as the preferred sensor.

That one of the multiple sensors that has acquired the information at the earliest timing in a frame may be determined as the preferred sensor.

The processor may integrate outputs of multiple pieces of the preferred sensors to execute recognition.

The processor may execute recognition by using a statistic amount of the outputs from the multiple preferred sensors.

According to the embodiment, a detection method includes acquiring information of types different from each other regarding a target by multiple sensors, acquiring a timing at which the information is acquired by each of the multiple sensors, determining, by a processor, whether or not the timings at which the information is acquired by the multiple sensors are in synchronism with each other, and controlling, by the processor, a recognition algorithm of the target in reference to a result of the decision.

According to the embodiment, a program causes, when the program is executed by a processor, the processor to execute acquiring information of types different from each other regarding a target acquired by multiple sensors and timings at which the information is acquired, determining whether or not the timings at which the information is acquired by the multiple sensors are in synchronism with each other, and controlling a recognition algorithm of the target in reference to a result of the decision.

### [Brief Description of Drawings]

[FIG. 1]

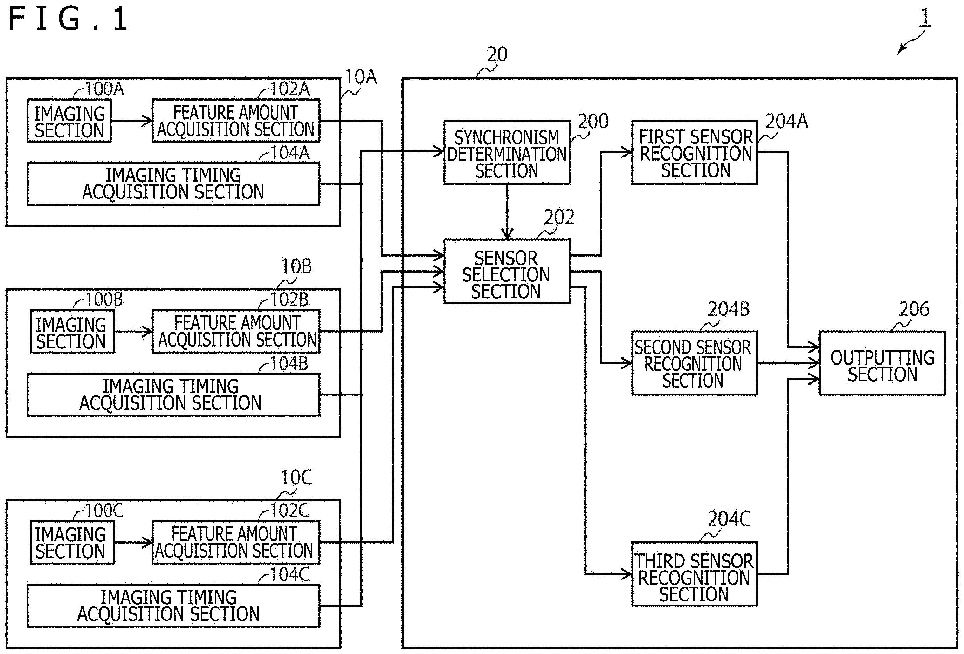

   FIG. 1 is a block diagram depicting an example of a configuration of a detection device according to an embodiment.
[FIG. 2]

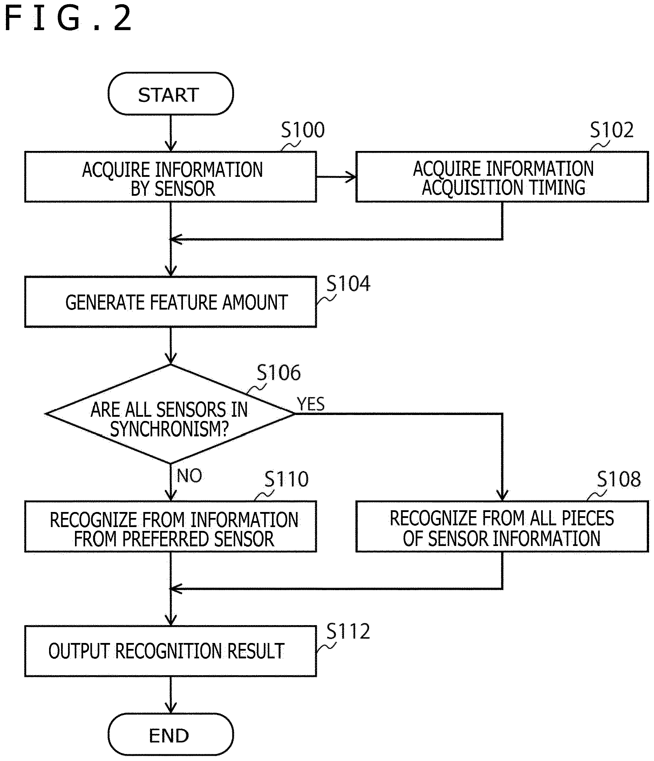

   FIG. 2 is a flow chart depicting a process performed by the detection device according to the embodiment.
[FIG. 3]

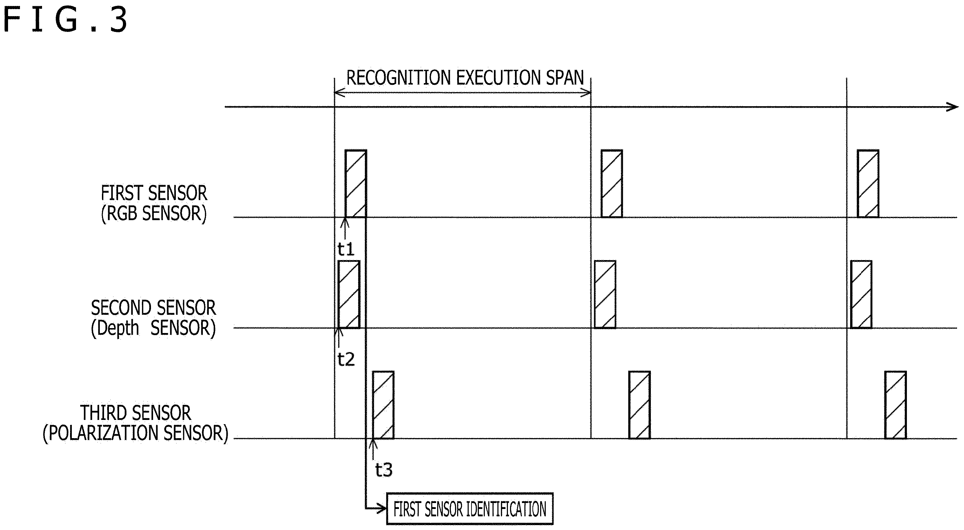

   FIG. 3 is a diagram depicting an example of an information acquisition timing and sensor selection in the detection device according to the embodiment.
[FIG. 4]

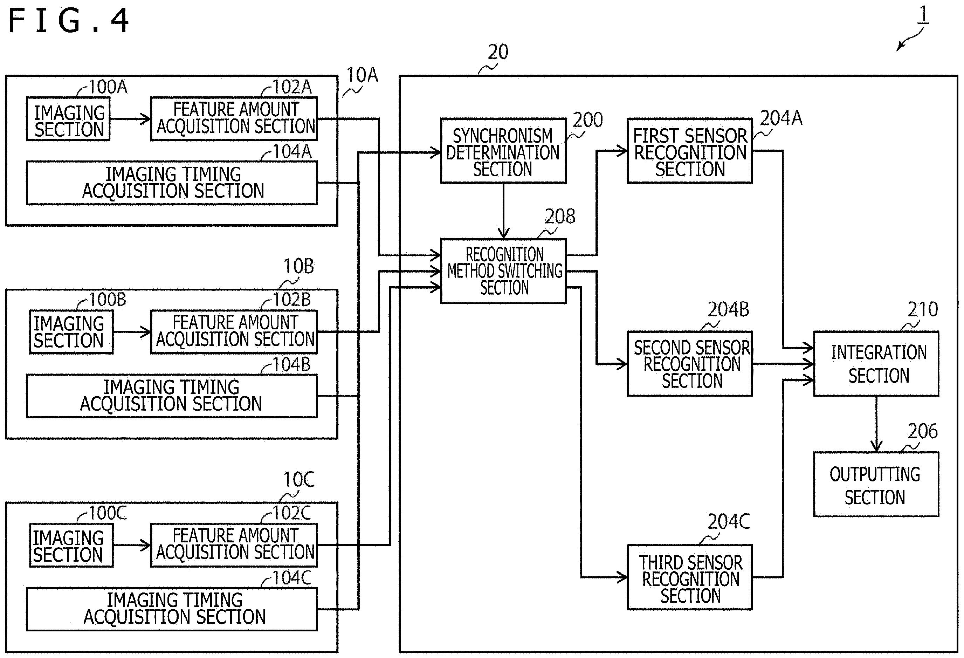

   FIG. 4 is a block diagram depicting an example of a configuration of a detection device according to another embodiment.
[FIG. 5]

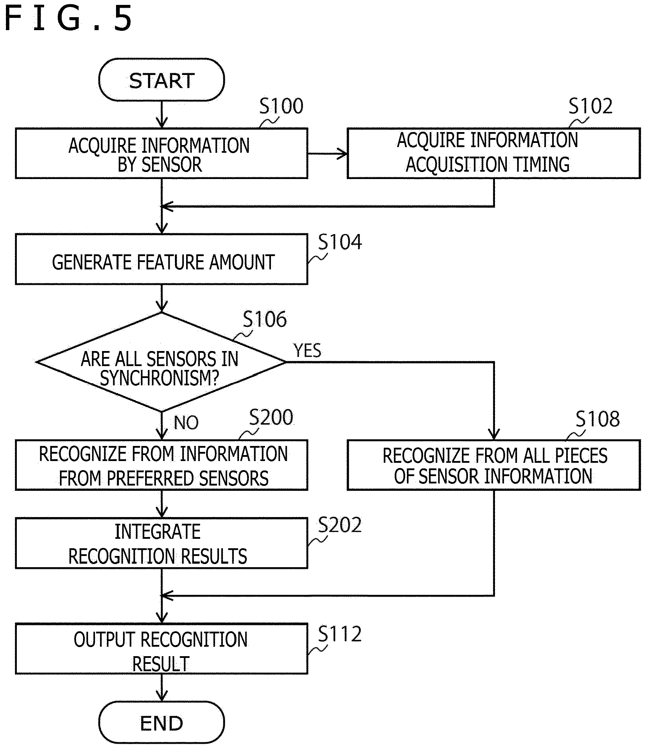

   FIG. 5 is a flow chart depicting a process performed by the detection device according to the other embodiment.
[FIG. 6]

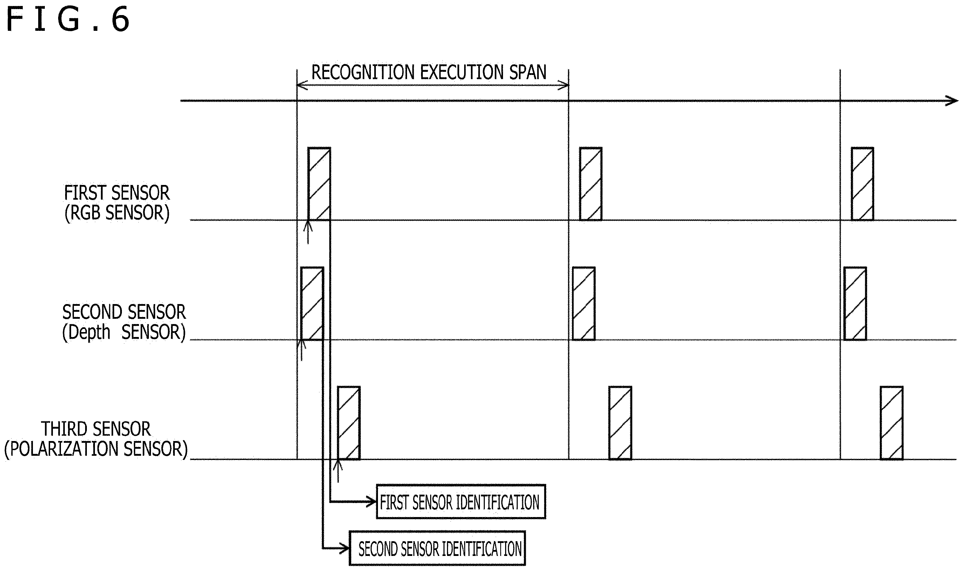

   FIG. 6 is a diagram depicting an example of an information acquisition timing and sensor selection in the detection device according to the other embodiment.
[FIG. 7]

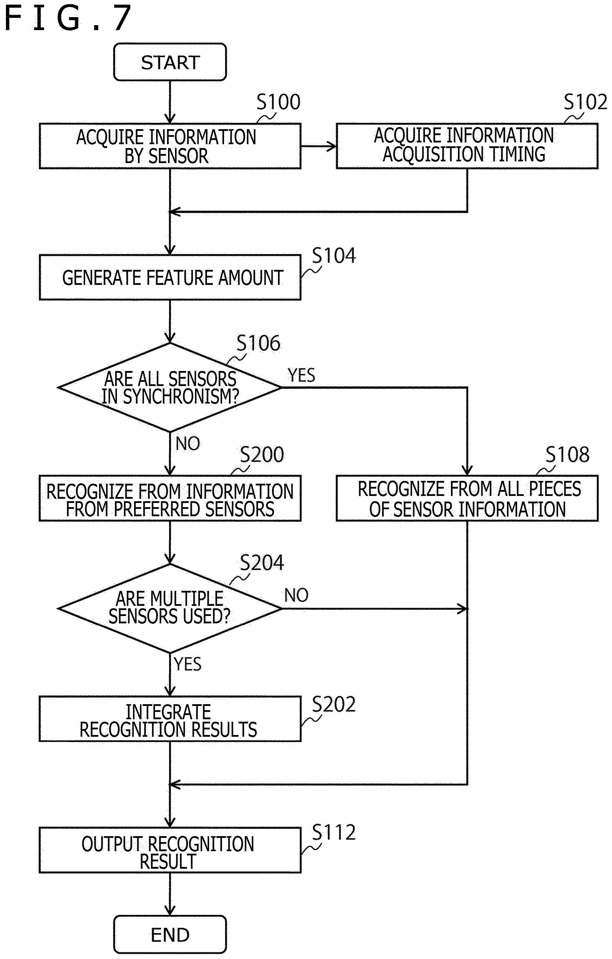

   FIG. 7 is a flow chart depicting a process performed by the detection device according to the other embodiment.
[FIG. 8]

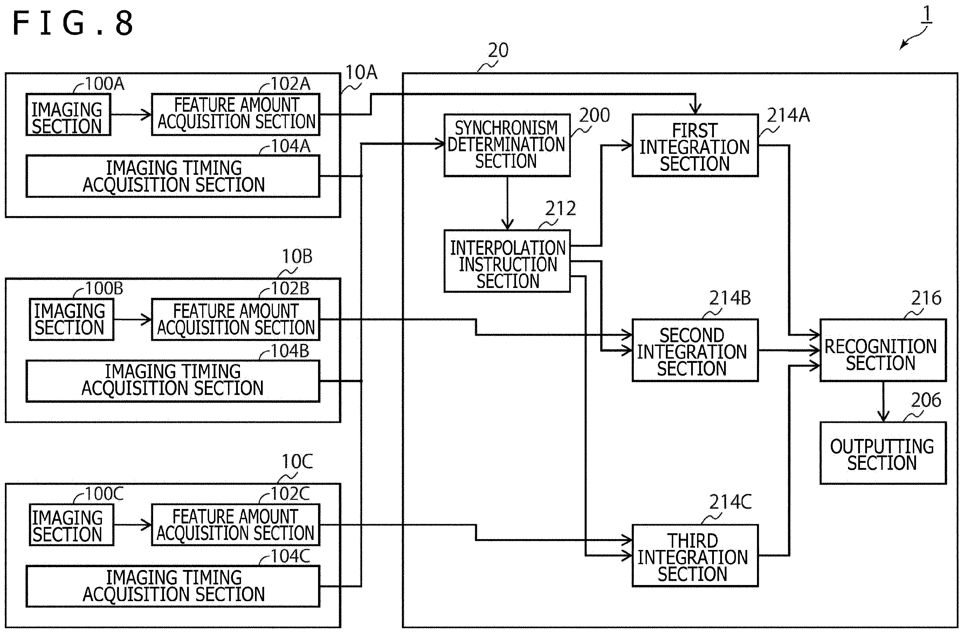

   FIG. 8 is a block diagram depicting an example of a configuration of a detection device according to a further embodiment.
[FIG. 9]

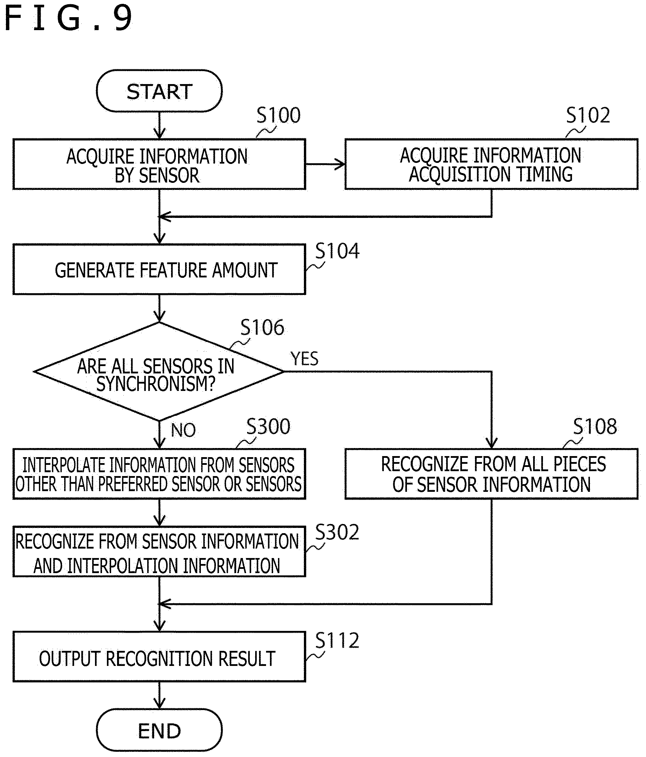

   FIG. 9 is a flow chart depicting a process performed by the detection device according to the further embodiment.
[FIG. 10]

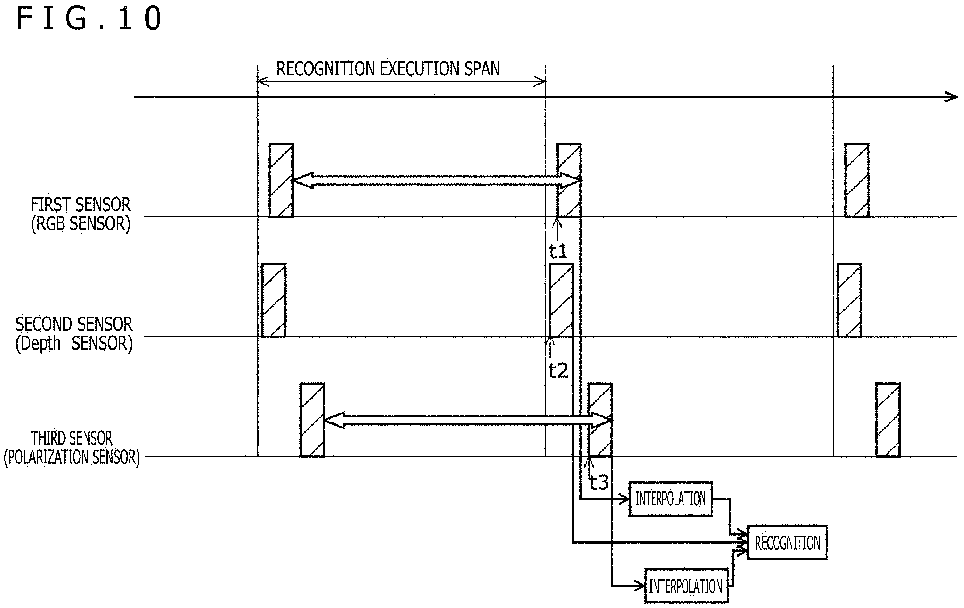

   FIG. 10 is a diagram depicting an information acquisition timing and an identification process in the detection device according to the further embodiment.
[FIG. 11]

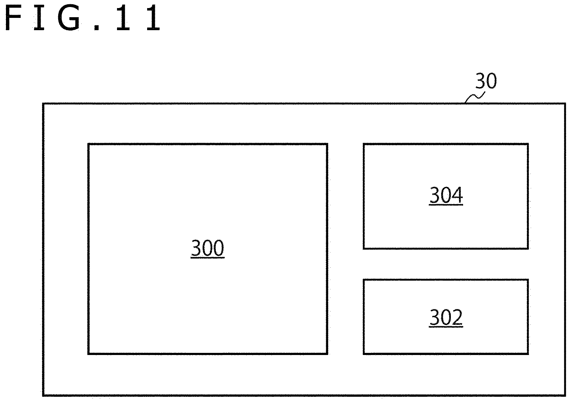

   FIG. 11 is a view schematically depicting an example of a sensor according to the embodiment.
[FIG. 12]

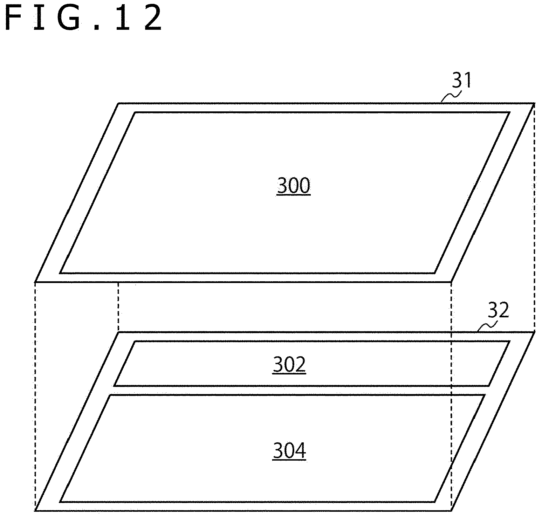

   FIG. 12 is a view schematically depicting another example of the sensor according to the embodiment.
[FIG. 13]

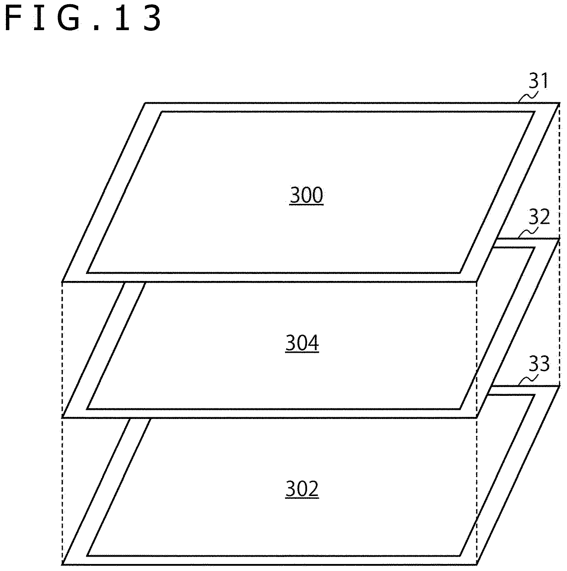

   FIG. 13 is a view schematically depicting a further example of the sensor according to the embodiment.

### [Description of Embodiments]

In the following, embodiments in the present disclosure are described with reference to the drawings. The drawings are used for explanation and the shape or the size of the configuration of each part in an actual device or the ratio in size or the like with regard to a different configuration need not be such as depicted in the figures. Further, since the drawings are depicted in a simplified form, a configuration necessary for implementation other than those depicted in the figures is provided appropriately.

### (First Embodiment)

FIG. 1 is a block diagram depicting an example of a configuration of a detection device according to an embodiment. A detection device 1 includes a sensor 10 and a processor 20. For example, the detection device 1 includes three sensors including a first sensor 10A, a second sensor 10B, and a third sensor 10C. The detection device 1 is not limited to including three sensors and may include two or four or more sensors.

Further, the detection device 1 includes a storage section that stores data as occasion demands. In a case where a process by the processor is implemented specifically as an information process by software with use of hardware resources, a program, an object file, an execution file, and so forth for allowing the processor to execute the process may be stored in the storage section. In other words, the process of the processor 20 described below may be described by a program. Further, such a form that part of the process is implemented by a program and part of the process is implemented by a circuit for exclusive use may be applied.

The sensor 10 includes an imaging section 100, a feature amount acquisition section 102, and an imaging timing acquisition section 104. Although it is assumed here that the sensor 10 is a camera or a sensor similar to a camera, the sensor is not restricted to this and may be a sensor of a different type. The sensor 10 may be, for example, a sensor that acquires ultrasonic waves. In this case, the sensor 10 may, instead of operating as an imaging section, operate as an information acquisition section that acquires appropriate information.

Further, in a case where multiple cameras are provided as the sensors 10, the detection device 1 may include multiple cameras that acquire information of different types as the sensors 10, or may include multiple cameras that perform imaging at different positions or in different postures from each other and acquire information of the same type. In other words, the multiple sensors 10 may include devices or modules that acquire multiple different types of information regarding the same object (target).

The imaging section 100 acquires, for example, a signal for converting a situation in a range within which detection is to be performed into an image. The imaging section 100 may convert, for example, an acquired analog signal into a digital signal and output the digital signal.

The feature amount acquisition section 102 extracts a feature amount in image data acquired by the imaging section 100. The extraction may be executed, for example, by rule-based computation or may be performed using a trained model obtained by training using machine learning such as a CNN (Convolutional Neutral Network), for example, various techniques of deep learning or a technique different from deep learning. The trained model is not limited to that by the CNN and may be that by MLP (Multi-Layer Perceptron) as a different example not restrictive.

It is to be noted that, if the processor 20 has sufficient processing performance and can appropriately process image data imaged by each of the sensors 10, within an appropriate period of time, then the feature amount acquisition section 102 may be provided not in the sensor 10 but in the processor 20.

The imaging timing acquisition section 104 acquires a timing at which the sensor 10 acquires information and acquires, in the case where the sensor 10 is a camera, for example, a timing at which the sensor 10 performs imaging. The imaging timing acquisition section 104 acquires an imaging timing, for example, as time information based on a clock provided in the sensor 10. Further, as another example, multiple sensors may be synchronized with each other at any timing at which sensing is started, such that a clock frequency or the like from the synchronization timing is acquired. It is to be noted that, although the name of imaging timing acquisition section is applied, in a case where the sensor 10 is not a camera as described above, the timing acquisition section acquires a timing at which information is acquired.

The sensor 10 outputs information acquired by the imaging section 100 or a feature amount calculated by the feature amount acquisition section 102 and imaging timing information acquired by the imaging timing acquisition section 104 to the processor 20.

The processor 20 is a processing circuit connected to the sensors 10 via an appropriate input/output interface, and includes a synchronism determination section 200, a sensor selection section 202, a sensor recognition section 204, and an outputting section 206.

The synchronism determination section 200 determines, in reference to imaging timing information outputted from the multiple sensors 10 (for example, the first sensor 10A, the second sensor 10B, and the third sensor 10C), whether or not imaging is being executed by the multiple sensors 10 that are appropriately synchronized with each other.

The sensor selection section 202 selects which one of the multiple sensors 10 is to be used to execute the recognition process, in reference to a determination result of the synchronism determination section 200. Details of the process of the sensor selection section 202 are described later. Although, in FIG. 1, a feature amount is outputted to the sensor selection section 202, this is not restrictive. For example, information selected by the sensor selection section 202 and outputted from the sensor 10 may be transferred directly to the corresponding sensor recognition section 204. The sensor selection section 202 may be in such a form that it directly connects a path between the sensor 10 and the corresponding sensor recognition section 204.

The sensor recognition section 204 executes a recognition process in reference to image data or feature amount data outputted from the sensors 10. The sensor recognition section 204 may be provided in a one-by-one corresponding relation to each sensor as illustrated in the figure or may be provided to multiple sensors. In the case of FIG. 1, the first sensor recognition section 204A executes recognition in reference to feature amount data outputted from the first sensor 10A. Similarly, the second sensor recognition section 204B and the third sensor recognition section 204C execute individual recognition processes corresponding to the second sensor 10B and the third sensor 10C in reference to outputs from the second sensor 10B and the third sensor 10C, respectively.

The outputting section 206 outputs, in reference to recognition results outputted from the individual sensor recognition sections 204, necessary information such as information regarding whether or not a target is detected and position information and so forth of the target.

FIG. 2 is a flow chart depicting a process according to the present embodiment. A process performed by the detection device 1, especially a process performed by the sensor selection section 202, is described in detail with reference to the flow chart.

First, each of the sensors 10 individually acquires information (S100). In a case where each sensor 10 is such a camera as depicted in FIG. 1, the sensors 10 individually perform imaging. If the sensors 10 are sensors that acquire other information, each sensor 10 acquires individual information.

In parallel to this process, or at a timing before or after this process, the imaging timing acquisition section 104 of each sensor 10 acquires a timing at which imaging is performed (S102). Also those processes are not restricted to imaging and are processes for acquiring timings at which information is acquired by the sensors 10.

Then, in a case where a feature amount can be generated in the sensors 10 in reference to the acquired information, that is, in a case where the feature amount acquisition section 102 is provided in the sensors 10, the feature amount acquisition section 102 generates a feature amount of the acquired information (S104).

Such information as mentioned above is transferred from the sensors 10 to the processor 20. The information to be transferred includes, for example, the acquired data (image data obtained by imaging) and data concerning the acquisition timing (imaging timing) and the feature amount. Also other information may be transferred within a range within which the information does not squeeze the bandwidth for the transfer.

The processor 20 to which the various kinds of data are transferred determines whether or not all sensors 10 acquire information in synchronism with each other (S106). The synchronism determination section 200 may perform determination of the synchronism by determining whether or not the imaging timings transferred thereto coincide with each other. Further, in a case where the imaging timings do not exactly coincide with each other and imaging is performed within a predetermined range in a processing frame of the processor 20 (in a nonrestrictive example, within ±3 frames or the like), it may be determined that the timings are in synchronism with each other.

All sensors 10 here are sensors that output information for implementing the process to be performed by the detection device 1, and sensors for any other use may be excepted. For example, since, in the present embodiment, the detection device 1 executes object recognition to implement detection, the term all sensors 10 signifies sensors that output information for executing recognition of an object (target).

Further, also in the recognition of a target, whether or not all pieces of imaging data are to be used can be changed freely by design, and, for example, also in the present embodiment, the sensors to be used are not limited to all sensors for imaging. For example, even in a case where multiple cameras that are sensors for imaging are available, in a case where object recognition is being executed at normal times specifically with use of the three sensors 10, the three sensors 10 are regarded as all sensors 10.

In a case where all sensors 10 are operating in synchronism with each other, that is, in a case where the imaging timings of all sensors 10 are not different from each other (S106: YES), the processor 20 executes a recognition process with use of the pieces of information outputted from all sensors 10 (S108). Since this process is similar to integration, connection, or the like of data in a recognition process that is typically executed, details of the process are omitted. In this case, the sensor selection section 202 selects recognizers relating to all sensors, and recognition is executed in the first sensor recognition section 204A, the second sensor recognition section 204B, and the third sensor recognition section 204C selected in this manner. Then, by integrating results of the recognition, a recognition result is acquired. Further, this is not restrictive, and according to the feature amounts outputted from the sensors 10, a single sensor recognition section 204 (not depicted) may execute recognition based on multiple feature amounts, for example, based on the feature amounts outputted from all sensors 10.

On the other hand, in a case where all sensors 10 are operating not in synchronism with each other, that is, in a case where the imaging timing of one of the sensors 10 is different from the other imaging timings (S106: NO), the processor 20 executes recognition from information from a preferred sensor (S110). The sensor selection section 202 selects one preferred sensor, and the sensor recognition section 204 corresponding to the preferred sensor executes recognition. For example, when the first sensor 10A in the example of FIG. 1 is selected as the preferred sensor, then the sensor selection section 202 selects the first sensor recognition section 204A that uses the data from the first sensor 10A for recognition, such that recognition is executed.

The preferred sensor is a sensor that is selected preferentially for execution of recognition in a case where a difference occurs in information acquisition among the sensors 10. For example, in a case where a general image is handled, a camera that acquires RGB data may be determined as the preferred sensor. In a case where multiple cameras that acquire RGB data are available, the camera that can implement recognition appropriately such as a camera that has the greatest angle or images the most front may be determined as the preferred sensor.

For example, in a case where recognition by temperature information is high in accuracy, an infrared camera may be determined as the preferred sensor. For example, in a case where recognition by a movement is required, a camera of the event-driven type may be determined as the preferred sensor. The determination of the preferred sensor is not restricted to them, and, for example, selecting a sensor 10 which can implement recognition most appropriately according to an environment or an application in use is sufficient.

Further, as another example that is not restrictive, one of the sensors 10 from which inputted data is outputted earliest in an information acquisition process of a series of recognition processes in the processor 20 may be determined as the preferred sensor.

In such a manner, the sensor selection section 202 controls the recognition algorithm by selecting a sensor 10 that is to execute recognition, depending upon whether or not the information acquisition timing of the sensor 10 is in synchronism with the others.

The result of recognition by the recognition section selected by the sensor selection section 202 is outputted appropriately via the outputting section 206 (S112). Here, the term outputted is a concept including both outputting the recognition result to the outside of the processor 20 and outputting the recognition result for a different process of the processor 20.

FIG. 3 is a diagram depicting an example of a timing of information acquisition in a case where the timings of information acquisition indicate some difference therebetween and a sensor 10 that is selected by the sensor selection section 202. Described with reference to FIG. 3, it is assumed that the first sensor 10A is an RGB camera, the second sensor 10B is a Depth camera, and the third sensor 10C is a polarization sensor. A span in which a recognition process by the detection device 1 is executed is indicated by an arrow mark at an upper portion in FIG. 3. Within this period of time, the detection device 1 executes a recognition process. A rectangle with slanting lines depicted in FIG. 3 indicates a timing of information acquisition. For example, an arrow mark in the lower left of the rectangle represents a timing of information acquisition.

In the example of FIG. 3, an imaging timing of the second sensor 10B can be acquired without delay in a recognition process, and the first sensor 10A performs imaging with a little delay and then the third sensor 10C performs imaging with a delay greater than that of the first sensor 10A. The imaging timing acquisition sections 104 of the sensors acquire, for example, timestamps at the timings of start of imaging as t1, t2, and t3 and transmit information regarding the timestamps to the processor 20. In the processor 20, the synchronism determination section 200 determines, in reference to the information regarding the timestamps, whether or not the timestamps are in synchronism with each other.

In such a case as just described, the sensor selection section 202 may select the first sensor 10A that acquires RGB data, as the preferred sensor, such that the first sensor recognition section 204A executes recognition with use of an output of the first sensor 10A. In this case, if the sensor selection section 202 selects the first sensor 10A, then the output from the first sensor 10A is transferred to the first sensor recognition section 204A, by which a recognition process is executed.

As another example, in a case where polarization information is important, for example, for detection of a situation of a road, for detection of a damage to a semiconductor wafer, or for similar detection, the sensor selection section 202 may select the third sensor 10C as the preferred sensor.

As a further example, the sensor selection section 202 may select the second sensor 10B that performs imaging at a timing most appropriate for a span of a recognition process.

In any case, appropriately outputted information is transferred to the second sensor recognition section 204B or the third sensor recognition section 204C, as in the case where the first sensor 10A is selected as described above.

In such a manner, the sensor selection section 202 selects one sensor 10 from among multiple sensors 10 such that a recognition process can be executed appropriately. The detection device 1 executes recognition in reference to the output of the selected sensor 10 and outputs a result of the recognition.

The sensor selection section 202 may select a sensor 10 that is high in recognition accuracy in regard to data prepared in advance or may select a sensor 10 whose timing is not different from other timings. As regards the recognition accuracy, the detection device 1 may control which one of the sensors 10 is to be used, depending upon a situation. For example, the sensor 10 to be selected as the preferred sensor may be switched according to surrounding environment and information such as the weather, time or ambient brightness.

The sensor selection section 202 continues this selection until synchronism in information acquisition among all sensors 10 is established. After the synchronism is established, recognition may be executed based on the outputs from all sensors 10 as depicted in the flow chart of FIG. 2.

As described above, according to the present embodiment, in a case where recognition and detection processes are executed using multiple sensors, timings of sensing by the sensors are acquired, and one of the sensors is selected in reference to the timings by a processor, so that a recognition process is executed in reference to the information from the selected sensor. By performing such a recognition process as just described, in a case where the sensors are not in synchronism with each other, the accuracy is not degraded by using and integrating information acquired at a different timing, but recognition is performed in reference to information from a sensor that can execute recognition of high accuracy. On the other hand, in a case where the sensors are in synchronism with each other, recognition and detection of a higher degree of accuracy can be implemented from information from multiple sensors.

### (Second Embodiment)

Although, in the first embodiment described hereinabove, a single sensor is used for recognition, this is not restrictive. The detection device 1 according to the present embodiment executes, in a case where the sensors 10 are not in synchronism with each other, recognition using information from multiple sensors 10.

FIG. 4 is a block diagram schematically depicting the detection device 1 according to the present embodiment. The processor 20 of the detection device 1 includes a recognition method switching section 208 in place of the sensor selection section and further includes an integration section 210.

The recognition method switching section 208 switches the recognition method depending upon a case in which the sensors 10 are in synchronism with each other or another case in which the sensors 10 are not in synchronism with each other. Further, in a case where the sensors 10 are not in synchronism with each other, the recognition method switching section 208 may switch the recognition method more minutely according to a synchronous state among the sensors 10.

The integration section 210 integrates recognition results from multiple sensors 10. The integration section 210 integrates outputs from the sensor recognition sections 204 selected, according to the recognition method selected by the recognition method switching section 208, and outputs a result of the integration.

FIG. 5 is a flow chart depicting a process of the detection device 1 according to the present embodiment. In steps denoted by the same reference as those in FIG. 2, the same processes are executed.

In a case where all sensors are not in synchronism with each other (S106: NO), the detection device 1 executes recognition from information from a preferred sensor as in the first embodiment (S200). However, this process is different from that in the first embodiment in that it is executed by multiple sensor recognition sections 204 in reference to information from multiple preferred sensors.

Thus, the recognition method switching section 208 controls which sensors 10 are to be used from among all sensors 10 and which recognition algorithm is to be used. As a process for switching the recognition algorithm, the recognition method switching section 208 selects multiple preferred sensors and selects a recognition algorithm based on the combination of the selected preferred sensors. Then, the sensor recognition sections 204 corresponding to the selected preferred sensors execute recognition based on information outputted from the preferred sensors.

Selection of the preferred sensors may be similar to that in the embodiment described hereinabove. For example, a predetermined number of sensors 10 that can execute recognition with a high degree of accuracy may be selected in the descending order of accuracy, or a sensor 10 that is good in timing of information acquisition may be selected in addition to a sensor 10 that is accurate in recognition or else a predetermined number of sensors 10 that are good in timing may be selected. Moreover, the selection method may be changed according to a surrounding environment, as in the embodiment described hereinabove.

The integration section 210 integrates results of execution of a recognition process that have been outputted from multiple preferred sensors (S202). For this integration process, a technique generally known may be used, as in the embodiment described hereinabove. Further, for example, in a case where classification using segmentation is used for recognition, a recognition result may be determined by the majority for each pixel, or in a case of estimation of coordinates, a recognition result may be determined from a statistic amount (an average value, a mode, a median, or the like) of individual recognition results. As another example, in a case where a task of sorting (Classification) is to be performed, a recognition result may be determined by the majority of classes outputted for this task. Furthermore, they may be applied to implement semantic segmentation using various results.

FIG. 6 is a diagram depicting outputs of the sensors 10 and timings of an identification process. For example, it is assumed that, as depicted in FIG. 6, recognition is performed in reference to outputs of the first sensor 10A and the second sensor 10B. In this case, it is assumed that such a determination that synchronism is not established is made and the first sensor 10A and the second sensor 10B are used for recognition.

After output of the second sensor 10B is made and the determination that synchronism is not established is made, the second sensor recognition section 204B executes identification in reference to the data outputted from the second sensor 10B, and after the output from the first sensor 10A ends, the first sensor recognition section 204A executes identification. As depicted in FIG. 6, the processes described may partly be processed in parallel or may be processed by pipeline processing.

After the identification of them ends, the outputs of them are integrated by the integration section 210, and the integrated result is outputted from the outputting section 206.

As described above, according to the present embodiment, it is also possible to select multiple preferred sensors to integrate results of them. Such a form as just described may be applied to a case in which processing time can be secured sufficiently in a state in which there is a time lag as in a case in which the sensors are not in synchronism with each other. Also in the present embodiment, the same process may be continued until synchronism is established subsequently or a recognition process that is different for each of recognition processes may be selected.

Further, this is not restrictive, and in reference to feature amounts outputted from the individual sensors 10, a single sensor recognition section 204 may execute recognition in reference to multiple feature amounts, for example, in reference to feature amounts outputted from all sensors 10. For example, it is also possible for a single recognition section to recognize two or more feature amounts.

Further, it is also possible for two or more recognition sections to recognize a single feature amount. As an example, in a case where three feature amounts A, B, and C are used, the second sensor recognition section 204B common to A and B and the third sensor recognition section 204C common to A and C may be provided. In this case, it is also possible to integrate one recognition result from A and B by the second sensor recognition section 204B and one recognition result from A and C by the third sensor recognition section 204C. As another example, a recognition result from A and a recognition result from B by the second sensor recognition section 204B and one recognition result from A and C by the third sensor recognition section 204C may be integrated. The number of types of feature amounts used for recognition and the number of recognition results need not coincide with each other in such a manner, and it is also possible to freely combine them or such recognition results may be integrated using the technique described above.

The first embodiment and the second embodiment described above can be applied together. FIG. 7 depicts a flow chart of a process according to one example. In such a manner, the detection device 1 may execute a recognition process for information from a preferred sensor or sensors as in the first embodiment up to S200 and as in the second embodiment after S200. After this, the detection device 1 branches the processing depending upon whether or not multiple sensors are to be used (S204).

In a case where multiple sensors are not to be used (S204: NO), information from one preferred sensor is outputted as in the first embodiment. On the other hand, in a case where multiple sensors are to be used (S204: YES), recognition results are integrated (S202) and outputted (S112) as in the second embodiment.

In such a manner, according to a synchronism state, whether one preferred sensor is to be used or multiple preferred sensors are to be used may further be selected. For example, in a case where it is difficult to secure a sufficient recognition time period or a sufficient degree of accuracy is secured by recognition by a single preferred sensor, a recognition result of the single preferred sensor may be outputted. On the contrary, for example, in a case where a processing time period for the recognition by multiple preferred sensors can be secured sufficiently or use of one preferred sensor causes a problem of accuracy, recognition results of multiple preferred sensors may be integrated and outputted. Further, whether a single preferred sensor is to be used or multiple preferred sensors are to be used may be determined according to a surrounding environment as in the foregoing description.

### (Third Embodiment)

Although, in the embodiments described hereinabove, one or multiple preferred sensors are selected and outputting is executed in reference to recognition results at the same recognition timing (in the same recognition execution span in FIG. 3 or 6) among the sensors, the contents of the present disclosure do not exclude interpolation in time based on outputs from the same sensor. In the present embodiment, in a case where synchronism is lost, the detection device 1 interpolates an output of the same sensor 10.

FIG. 8 is a block diagram schematically depicting the detection device 1 according to the present embodiment. The processor 20 of the detection device 1 includes an interpolation instruction section 212, interpolation sections 214, and a recognition section 216.

The interpolation instruction section 212 issues an instruction for interpolation of information outputted from the individual sensors 10, in reference to a result of determination by the synchronism determination section 200. For example, in a case where the synchronism determination section 200 determines that synchronism is not established, the interpolation instruction section 212 issues an interpolation request to the interpolation section 214 to acquire imaging timings of the individual sensors 10 and perform interpolation based on the imaging timings.

The interpolation section 214 includes, in a case where three sensors 10 are provided as depicted in FIG. 8, a first interpolation section 214A, a second interpolation section 214B, and a third interpolation section 214C similarly to the sensor recognition section 204 in the embodiments described hereinabove. The interpolation section 214 generates, according to the interpolation request outputted from the interpolation instruction section 212, interpolation data, by using output information from the individual sensors 10 acquired in the past and output information from the sensors 10 acquired most recently. The pieces of interpolated data are pieces of data that can be regarded as pieces of data imaged at the same timing at which the pieces of data are imaged. In other words, in a case where the synchronism among the sensors 10 is not established, the interpolation section 214 generates interpolated data that can be regarded as having been imaged at the synchronized timing.

It is to be noted that an output from any sensor 10 for which there is no necessity for interpolation can be used without interpolation being performed therefor. Further, the detection device 1 may include a frame memory or the like for storing data to be used for the interpolation.

The recognition section 216 executes, for data outputted from the interpolation sections and outputs from the sensors for which no interpolation is required, a recognition process of a target by using the data outputted from the sensors 10.

A result of the recognition by the recognition section 216 is outputted via the outputting section 206.

FIG. 9 is a flow chart depicting a process to be performed by the detection device 1 in the present embodiment. Processes denoted by the same reference signs are processes that are basically similar to those in the first embodiment.

In a case where the synchronism determination section 200 determines that all sensors 10 are not in synchronism with each other (S106: NO), the interpolation instruction section issues a request for interpolating data to the interpolation sections 214 corresponding to the sensors 10, and each interpolation section 214 executes an interpolation process (S300).

As in the first embodiment described hereinabove, the interpolation instruction section 212 first determines preferred sensors that do not require interpolation of data. Thereafter, the interpolation instruction section 212 transmits an interpolation command to the interpolation sections 214 that correspond to the sensors 10 other than the preferred sensors. For example, in a case where the first sensor 10A is a preferred sensor, the interpolation instruction section 212 issues a request for interpolation of output data from the second sensor 10B and the third sensor 10C to the second interpolation section 214B and the third interpolation section 214C, respectively.

Each of the interpolation sections 214 that receives the request executes an interpolation process in reference to data acquired in a current recognition processing frame (recognition process span of FIG. 3) and data acquired in the immediately preceding recognition processing frame. This interpolation process is a process of interpolating outputs from the other sensors 10 such that the imaging timings of them become coincident with the imaging timing of the preferred sensor. Also this process is executed with use of various learned models or by performance of a rule-based process, similarly to the process of the sensor recognition section 204.

Then, the recognition section 216 executes recognition in reference to the output information from the preferred sensor and the interpolated output information from the other sensors 10 (S302). This recognition can be implemented by a process similar to the process in S108 in the embodiment described hereinabove, which implements recognition from multiple kinds of data.

In such a manner, in the present embodiment, it is possible to execute an appropriate process by using data from the other sensors 10 interpolated such that the timing thereof is deemed as a timing synchronized with a timing at which imaging is performed by the preferred sensor and output data of the preferred sensor.

FIG. 10 is a diagram depicting an imaging timing and timings of other processes according to the present embodiment. In the example of FIG. 10, it is assumed that the sensor 10 that executes imaging at the earliest timing in a recognition process frame is determined as a preferred sensor. In this case, the second sensor is determined as a preferred sensor.

The interpolation instruction section 212 transmits an instruction to the first interpolation section 214A and the third interpolation section 214C to interpolate outputs of the first sensor 10A and the third sensor 10C. The first interpolation section 214A receives the instruction and executes an interpolation process of outputted data according to an imaging timing t1 of the first sensor 10A, an imaging timing t2 of the second sensor 10B, and an imaging timing of the first sensor 10A in the preceding recognition processing frame. For example, as indicated by an outline arrow mark in FIG. 10, the first interpolation section 214A executes an interpolation process adjusted to the timing t2 to obtain data between the two pieces of output data. Similarly, the third interpolation section 214C generates data at the timing of t2 in reference to t3, t2 and the acquisition timing of the preceding frame.

The recognition section 216 executes a recognition process in reference to those pieces of interpolation data and data acquired by the second sensor 10B that is the preferred sensor. If the sensor 10 that performs imaging at the earliest timing is determined as the preferred sensor in such a manner, then since, as generation of interpolation data between a past frame and a current frame, only is it necessary to generate data at the imaging timing t2 that is in the past with respect to the data in the current frame, it is possible to generate interpolation data of a high degree of accuracy.

It is to be noted that, although it is depicted in FIG. 10 that the sensor 10 which has performed imaging at the earliest timing is determined as the preferred sensor, this is not restrictive. For example, in a case where the recognition accuracy of RGB data is high, the RGB data may be used without interpolation being performed therefor, that is, the first sensor 10A that outputs RGB data may be determined as the preferred sensor. In such a manner, a sensor from which a recognition result of high accuracy is obtained may be selected as the preferred sensor. In this case, although the output from the second sensor 10B is used for interpolation at t1 that is the future with respect to the timing of t2, it is possible to generate interpolation data in the future by a technique of motion prediction or the like. Further, a sensor from which RGB data is obtained may be determined as the preferred sensor irrespective of the accuracy.

This is not restrictive, and it is also possible to use some other sensor such as a sensor that has difficulty in executing interpolation of information or a sensor that is latest in imaging timing, as the preferred sensor. Further, although FIG. 10 illustrates interpolation between two frames, a further frame in the past may be used additionally to execute an interpolation process for which the three frames are used.

As described above, according to the present embodiment, since interpolation data is generated such that relevant pieces of data can be regarded as having been imaged at the same timing, it is possible to implement a recognition process in a state in which the imaging timings by the sensors are synchronized with each other. When the third embodiment is compared with the two embodiments described hereinabove, it is possible to use pieces of output data from multiple sensors whose timings can be regarded as the same timing, and the accuracy of recognition can be improved.

Although, in the embodiments described hereinabove, the sensors 10 are an RGB sensor, a Depth sensor, and a polarization sensor listed as nonrestrictive examples, the types of the sensors are not restricted to them. For example, as the sensors, sensors including other imaging elements such as an infrared sensor, a temperature sensor, an event-driven sensor and a ToF sensor may be used, or sensors that do not acquire image information such as an ultrasonic sensor or some ToF sensors may be used.

For example, if a sensor that is related to a temperature such as an infrared sensor is used, then in a case where detection of a person or the like in the dark is intended, it is possible to interpolate RGB data or the like from temperature information.

For example, if an event-driven sensor is used, then in a case where detection of a movement with respect to a surveillance camera or the like is intended, it is possible to analyze in detail a region that includes a movement.

For example, multiple Depth sensors may be used, and in this case, it is also possible to use sensors of the passive stereo type and the active stereo type in addition to the ToF sensor. For example, although the ToF sensor sometimes indicates degradation of the accuracy in a case where there are many reflections or the sunlight is strong, in such a case as just described, the recognition accuracy can be improved with use of some other sensor. Although a sensor of the passive stereo type has difficulty in dealing with a case in which there is no pattern or similar patterns appear successively or an active stereo sensor has difficulty in dealing with a case in which it is difficult to acquire a pattern or similar patterns appear successively, the accuracy can be improved by a ToF sensor.

By using multiple sensors and determining whether or not they are in synchronism with each other to control the recognition algorithm as described above, it is possible to implement a recognition process that is appropriate in various situations and is high in accuracy.

Note that it is also possible to apply the third embodiment together with at least one of the first embodiment or the second embodiment. For example, it is possible to integrate a recognition result with frame-interpolated data as in the second embodiment or further use a statistic amount in this integration.

The detection device 1 in the present disclosure can be incorporated, for example, in a monitoring apparatus, an inspection apparatus in a factory or the like, an inspection apparatus for a semiconductor process, an on-vehicle camera, an apparatus for automatic operation of a robot, a drone or the like and an apparatus that is used for recognition or detection of some kind of object that becomes a target.

FIG. 11 depicts an example of schematic incorporation of the sensors 10. The sensors 10 may be mounted, for example, on one semiconductor substrate 30. The semiconductor substrate 30 includes, for example, an imaging section 300, a signal processing section 302, and a storage section 304. Data acquired by the imaging section 300 may be transmitted to the signal processing section 302 through an appropriate route, subjected to A/D conversion and recognition/interpolation processes (processes by a neural network) by the signal processing section 302, and then outputted to the external processor 20 via an appropriate interface.

Into the storage section 304, appropriate data for executing recognition is stored. It is to be noted that the shape of each circuit is depicted schematically and is not restricted to this example. Further, it is not excluded that some other necessary circuit is incorporated additionally. Further, a control circuit and further logic circuits may be incorporated further. Moreover, though not depicted, also an imaging timing acquisition section that acquires an imaging timing is mounted on the semiconductor substrate 30. In a case where a control circuit is available, the imaging timing acquisition section may operate as part of the control section. They are similar also in the following examples.

FIG. 12 depicts another example of schematic incorporation of the sensor 10. The sensor 10 may be mounted, for example, on each of two semiconductor substrates 31 and 32. The semiconductor substrates 31 and 32 are, for example, laminated semiconductor substrates, and the individual substrates are electrically connected to each other appropriately. As a nonrestrictive example, the imaging section 300 is provided on the upper semiconductor substrate 31, and the signal processing section 302 and the storage section 304 are provided on the lower semiconductor substrate 32.

FIG. 13 is a further example of schematic incorporation of the sensor 10. The sensor 10 may be mounted, for example, on each of three semiconductor substrates 31, 32, and 33. The semiconductor substrates 31, 32, and 33 are, for example, laminated semiconductor substrates, and the individual substrates are electrically connected to each other appropriately. As a nonrestrictive example, on the semiconductor substrate 31, the imaging section 300 may be provided; on the semiconductor substrate 32, the storage section 304 may be provided; and on the semiconductor substrate 33, the signal processing section 302 may be provided.

The substrates laminated in FIGS. 12 and 13 may be connected to each other through via holes or may be connected to each other by some other method such as micro dumps. The substrates can be laminated by, for example, any technique such as CoC (Chip on Chip), CoW (Chip on Wafer), or WoW (Wafer on Wafer).

The embodiments described above may have such forms as described below.
(1) A detection device including:
   multiple sensors that acquire different information regarding a target; and
   a processor, in which
   each of the multiple sensors includes a timing outputting section that outputs a timing at which the information is acquired, and
   the processor
      determines whether or not the timings at which the multiple sensors acquire the information are in synchronism with each other, and
      controls a recognition algorithm of the target in reference to a result of the determination.
(2) The detection device according to (1), in which the multiple sensors further include a feature amount acquisition section that acquires a feature amount of the target, and
   the processor executes a recognition process of the target in reference to the feature amounts acquired from the multiple sensors.
(3) The detection device according to (1) or (2), in which the processor executes, in a case where the timings at which the information is acquired by the multiple sensors are in synchronism with each other, recognition of the target in reference to an output or outputs of one or multiple predetermined pieces of the sensors among the multiple sensors.
(4) The detection device according to (2) or (3), in which the processor executes, in a case where the timings at which the information is acquired by the multiple sensors are not in synchronism with each other, recognition of the target by using an output from a preferred sensor and supplementarily using an output or outputs from the sensor or sensors other than the preferred sensor.
(5) The detection device according to (4), in which the preferred sensor includes a sensor capable of executing recognition of high accuracy among the multiple sensors.
(6) The detection device according to (4) or (5), in which, in a case where a camera that acquires at least RGB information is included in the multiple sensors, the camera is determined as the preferred sensor.
(7) The detection device according to (4), in which that one of the multiple sensors that has acquired the information at an earliest timing in a frame in the recognition process is determined as the preferred sensor.
(8) The detection device according to any one of (4) through (7), in which
   the processor
   performs interpolation of the information outputted from the sensor and used supplementarily, in reference to information acquired in a frame in the past, and
   executes recognition of the target by using the interpolated information supplementarily.
(9) The detection device according to (2) or (3), in which the processor executes, in a case where the timings at which the information is acquired by the multiple sensors are not in synchronism with each other, recognition of the target by using an output of a preferred sensor among the multiple sensors.
(10) The detection device according to (9), in which the preferred sensor includes a sensor capable of executing recognition of high accuracy among the multiple sensors.
(11) The detection device according to (9) or (10), in which, in a case where a camera that acquires at least RGB information is included in the multiple sensors, the camera is determined as the preferred sensor.
(12) The detection device according to (9), in which that one of the multiple sensors that has acquired the information at an earliest timing in a frame is determined as the preferred sensor.
(13) The detection device according to any one of (4) through (7) or (9) through (12), in which the processor integrates outputs of multiple pieces of the preferred sensors to execute recognition.
(14) The detection device according to (13), in which the processor executes recognition by using a statistic amount of the outputs from the multiple preferred sensors.
(15) A detection method including:
   acquiring information of types different from each other regarding a target by multiple sensors;
   acquiring a timing at which the information is acquired by each of the multiple sensors;
   determining, by a processor, whether or not the timings at which the information is acquired by the multiple sensors are in synchronism with each other; and
   controlling, by the processor, a recognition algorithm of the target in reference to a result of the determination.
(16) A program that causes, when the program is executed by a processor, the processor to execute:
   acquiring information of types different from each other regarding a target acquired by multiple sensors and timings at which the information is acquired;
   determining whether or not the timings at which the information is acquired by the multiple sensors are in synchronism with each other; and
   controlling a recognition algorithm of the target in reference to a result of the determination.

The modes of the present disclosure are not limited to the embodiments described above and include various modifications that can be conceived of. The advantageous effects provided by the present disclosure are also not limited to the contents described above. The constituent elements in the embodiments may be applied by appropriately being combined with one another. In other words, various additions, modifications, and partial deletions can be made within a scope not departing from the conceptual idea and gist of the present disclosure that are derived from the details defined in the claims and the equivalents thereof.

### [Reference Signs List]

1: Detection device
10: Sensor
100: Imaging section
102: Feature amount acquisition section
104: Imaging timing acquisition section
20: Processor
200: Synchronism determination section
202: Sensor selection section
204: Sensor recognition section
206: Outputting section
208: Recognition method switching section
210: Integration section
212: Interpolation instruction section
214: Interpolation section
216: Recognition section
30, 31, 32, 33: Semiconductor substrate
300: Imaging section
302: Signal processing section
304: Storage section

## Claims

1. A detection device comprising:
multiple sensors that acquire different information regarding a target; and
a processor, wherein
each of the multiple sensors includes a timing outputting section that outputs a timing at which the information is acquired, and
the processor
determines whether or not the timings at which the multiple sensors acquire the information are in synchronism with each other, and
controls a recognition algorithm of the target in reference to a result of the determination.

2. The detection device according to claim 1, wherein the multiple sensors further include a feature amount acquisition section that acquires a feature amount of the target, and
the processor executes a recognition process of the target in reference to the feature amounts acquired from the multiple sensors.

3. The detection device according to claim 1, wherein the processor executes, in a case where the timings at which the information is acquired by the multiple sensors are in synchronism with each other, recognition of the target in reference to an output or outputs of one or multiple predetermined pieces of the sensors among the multiple sensors.

4. The detection device according to claim 2, wherein the processor executes, in a case where the timings at which the information is acquired by the multiple sensors are not in synchronism with each other, recognition of the target by using an output from a preferred sensor and supplementarily using an output or outputs from the sensor or sensors other than the preferred sensor.

5. The detection device according to claim 4, wherein the preferred sensor includes a sensor capable of executing recognition of high accuracy among the multiple sensors.

6. The detection device according to claim 4, wherein, in a case where a camera that acquires at least RGB information is included in the multiple sensors, the camera is determined as the preferred sensor.

7. The detection device according to claim 4, wherein that one of the multiple sensors that has acquired the information at an earliest timing in a frame in the recognition process is determined as the preferred sensor.

8. The detection device according to claim 4, wherein
the processor
performs interpolation of the information outputted from the sensor and used supplementarily, in reference to information acquired in a frame in the past, and
executes recognition of the target by using the interpolated information supplementarily.

9. The detection device according to claim 2, wherein the processor executes, in a case where the timings at which the information is acquired by the multiple sensors are not in synchronism with each other, recognition of the target by using an output of a preferred sensor among the multiple sensors.

10. The detection device according to claim 9, wherein the preferred sensor includes a sensor capable of executing recognition of high accuracy among the multiple sensors.

11. The detection device according to claim 9, wherein, in a case where a camera that acquires at least RGB information is included in the multiple sensors, the camera is determined as the preferred sensor.

12. The detection device according to claim 9, wherein that one of the multiple sensors that has acquired the information at an earliest timing in a frame is determined as the preferred sensor.

13. The detection device according to claim 4, wherein the processor integrates outputs of multiple pieces of the preferred sensors to execute recognition.

14. The detection device according to claim 13, wherein the processor executes recognition by using a statistic amount of the outputs from the multiple preferred sensors.

15. The detection device according to claim 9, wherein the processor integrates the outputs of multiple pieces of the preferred sensors to execute recognition.

16. The detection device according to claim 15, wherein the processor executes recognition using a statistic amount of the outputs from the multiple preferred sensors.

17. A detection method comprising:
acquiring information of types different from each other regarding a target by multiple sensors;
acquiring a timing at which the information is acquired by each of the multiple sensors;
determining, by a processor, whether or not the timings at which the information is acquired by the multiple sensors are in synchronism with each other; and
controlling, by the processor, a recognition algorithm of the target in reference to a result of the determination.

18. A program that causes, when the program is executed by a processor, the processor to execute:
acquiring information of types different from each other regarding a target acquired by multiple sensors and timings at which the information is acquired;
determining whether or not the timings at which the information is acquired by the multiple sensors are in synchronism with each other; and
controlling a recognition algorithm of the target in reference to a result of the determination.
